# EUROPÄISCHE PATENTSCHRIFT

(11) **EP 4 204 721 B1**
(45) Veröffentlichungstag und Bekanntmachung des Hinweises auf die Patenterteilung: **17.07.2024**
(21) Anmeldenummer: 20768283.2
(22) Anmeldetag: 27.08.2020
(51) Int. Cl.: F16K 31/04, F16K 37/00, F25B 41/31, F25B 41/35

(54) **AKTOR FÜR EIN ELEKTRISCHES EXPANSIONSVENTIL FÜR EINEN KÄLTE- ODER KLIMAKREISLAUF EINES KRAFTFAHRZEUGS SOWIE ELEKTRISCHES EXPANSIONSVENTIL MIT EINEM DERARTIGEN AKTOR**
ACTUATOR FOR AN ELECTRIC EXPANSION VALVE FOR A REFRIGERATION OR AIR-CONDITIONING CIRCUIT OF A MOTOR VEHICLE, AND ELECTRIC EXPANSION VALVE HAVING SUCH AN ACTUATOR
ACTIONNEUR POUR UNE SOUPAPE DE DÉTENTE ÉLECTRIQUE POUR UN CIRCUIT DE RÉFRIGÉRATION OU DE CLIMATISATION D'UN VÉHICULE AUTOMOBILE, ET SOUPAPE DE DÉTENTE ÉLECTRIQUE COMPORTANT UN TEL ACTIONNEUR

(43) Veröffentlichungstag der Anmeldung: 05.07.2023
(73) Patentinhaber: Pierburg GmbH, 41460 Neuss (DE)
(72) Erfinder: GERARDS, Hans, 41460 Neuss (DE); BÜRGER, Frank, 41460 Neuss (DE); BEUTLER, Richard, 41460 Neuss (DE)
(74) Vertreter: terpatent PartGmbB
(86) Internationale Anmeldenummer: PCT/EP2020/073983
(87) Internationale Veröffentlichungsnummer: WO 2022/042844

(56) Entgegenhaltungen:
- EP-B1- 3 392 538
- JP-A- 2005 321 029

## Beschreibung

Die Erfindung betrifft einen Aktor für ein elektrisches Expansionsventil für einen Kälte- oder Klimakreislauf eines Kraftfahrzeugs mit einem bürstenlosen Gleichstrommotor mit einem Stator und einem Rotor, einem Spalttopf mit einem Boden und einer radial begrenzenden Mantelfläche, die zwischen dem radial außen liegenden Stator und dem radial innen angeordneten Rotor angeordnet ist, einer Spindelmutter, die mit dem Rotor drehfest gekoppelt ist, und einer Spindelstange, die axial bewegbar ist und gegen Verdrehen gesichert ist. Des Weiteren betrifft die Erfindung ein Expansionsventil mit einem derartigen Aktor, welches einen Regelkörper aufweist, der am zum Permanentmagneten entgegengesetzten Ende der Spindelstange ausgebildet ist, und der mit einem Ventilsitz zusammenwirkt, der an einem Gehäuse des Expansionsventils ausgebildet ist.

Expansionsventile dienen dazu, den Druck des Arbeitsfluids durch Drosselung des zur Verfügung stehenden Durchströmungsquerschnitts zu verringern und das Volumen des Arbeitsfluids zu erhöhen, dieses also zu expandieren. Durch die Verwendung geregelter Expansionsventile kann dabei sowohl der Druckabfall und damit die Volumenzunahme geregelt werden als auch der Fluidstrom nahezu vollständig unterbrochen werden.

In Kälte- oder Klimakreisläufen werden diese Ventile vor den Verdampfern und hinter den Verflüssigern angeordnet. Durch die Volumenzunahme wird das Arbeitsfluid teilweise verdampft, während das noch flüssige Arbeitsfluid im Verdampfer Wärme aufnimmt, wodurch auch der flüssige Teil verdampft. Dieses nun gasförmige Arbeitsfluid wird einem Kompressor zugeführt und verdichtet, um anschließend im Verflüssiger wieder in den flüssigen Aggregatzustand umgewandelt zu werden, wodurch der geschlossene Kreislauf gebildet wird. Diesem Kreislauf kann entsprechend Wärme oder Kälte im Bereich der Verdampfer und Verflüssiger entnommen werden.

Um den Druckabfall am Expansionsventil und die damit einhergehende Volumenzunahme möglichst genau regeln zu können, ist es wünschenswert, die Stellung des Regelkörpers zum Ventilsitz möglichst genau zu kennen und entsprechend regeln zu können.

Um dies zu erreichen, wird in der EP 3 392 538 B1 ein elektrisch betätigtes Ventil vorgeschlagen, welches mittels eines Spalttopfmotors angetrieben wird, wobei der Rotor des Spalttopfmotors mit einer Spindelmutter verbunden ist, in der eine Spindel drehbar angeordnet ist, die bei Drehung des Rotors axial bewegt wird. Ein Drehwinkel des Rotors wird über einen Winkelsensor erfasst, der mit einem mit dem Rotor verbundenen Permanentmagneten zusammenwirkt. Nachteilig ist jedoch, dass ein Hub des Ventils nur indirekt über die Drehwinkelstellung und die Anzahl der Drehungen berechnet werden kann. Entsprechend ist eine Ausgabe einer Spannung des Sensors nicht eindeutig einer Position der Spindelstange zuzuordnen.

Des Weiteren ist aus der JP 2005-321029 A ein Linearaktor bekannt, der einen Stator und einen Rotor aufweist, die durch ein Spaltrohr voneinander getrennt sind. Das Spaltrohr ist an einem Gehäuseteil befestigt, welches das hintere Lager der Spindel aufnimmt, welche über eine mit dem Rotor verbundene Spindelmutter auf- und abwärts bewegt werden kann. Am Ende der Spindelstange ist ein Magnet angeordnet. Das Ende der Spindelstange ist in einer Führung gelagert, über welche eine Drehung der Spindelstange verhindert wird. Wird das Ventil in seine Endposition verschoben ragt der Magnet über die Führung hinweg und ist in dieser Position radial gegenüberliegend zu einem Sensor angeordnet, der diese Position detektiert. Eine genaue Positionsdetektierung über den gesamten Hub des Ventils ist so nicht möglich.

Es stellt sich daher die Aufgabe, einen Aktor für ein elektrisches Expansionsventil für einen Kälte- oder Klimakreislauf eines Kraftfahrzeugs sowie ein Expansionsventil mit einem derartigen Aktor bereit zu stellen, mit denen eine genaue Hubposition der Spindelstange beziehungsweise des auf der Spindelstange ausgebildeten Regelkörpers bestimmbar ist, ohne dass Umrechnungen vorgenommen werden müssen oder Ungenauigkeiten beispielswiese aufgrund sich ändernden Spiels zwischen den Gewinden der Spindelstange und der Spindelmutter in Kauf genommen werden muss.

Diese Aufgabe wird durch einen Aktor für ein elektrisches Expansionsventil für einen Kälte- oder Klimakreislauf eines Kraftfahrzeugs mit den Merkmalen des Anspruchs 1 sowie ein elektrisches Expansionsventil mit einem derartigen Aktor mit den Merkmalen des Anspruchs 11 gelöst.

Der erfindungsgemäße Aktor weist einen bürstenlosen Gleichstrommotor mit einem Stator und einem Rotor auf. Ein Spalttopf, der einen Boden aufweist, von dem aus sich eine radial begrenzende Mantelfläche zwischen dem radial außen liegenden Stator und dem radial innen angeordneten Rotor erstreckt, trennt den Stator vom durchströmten Bereich des Aktors.

Mit dem Rotor ist eine Spindelmutter drehfest gekoppelt, die entsprechend mit dem Rotor gedreht wird. Diese Spindelmutter läuft mit ihrem Innengewinde auf einem Außengewinde einer Spindelstange, die axial verschiebbar und gegen ein Verdrehen gesichert ist. Beim erfindungsgemäßen Expansionsventil ist an dieser Spindelstange und zwar am zum Permanentmagneten entgegengesetzten Ende der Spindelstange ein Regelkörper ausgebildet beziehungsweise befestigt, der mit einem Ventilsitz zusammenwirkt, der an einem Gehäuse des Expansionsventils ausgebildet ist. Zur Bestimmung der Hubposition der Spindelstange und damit gegebenenfalls des Regelkörpers ist am zum Boden des Spalttopfes weisenden Ende der Spindelstange ein Permanentmagnet angeordnet, der mit einem Hubsensor zusammenwirkt, der zentral an der zur Spindelstange gegenüberliegenden Seite des Bodens des Spalttopfes angeordnet ist. Während sich die magnetischen Felder der Permanentmagneten des Rotors durch die symmetrische Lage zueinander gegenseitig aufheben, kann die Stellung des mit der Spindelstange gekoppelten Magneten exakt bestimmt werden, da die auf den Hubsensor wirkende Feldstärke des Permanentmagneten mit reduzierendem Abstand zum Hubsensor steigt. Entsprechend kann jeder am Hubsensor gemessenen und in eine entsprechende Spannung umgewandelten Feldstärke unmittelbar eine eindeutige Lage der Spindelstange zugeordnet werden. Der Rotor umgibt einen magnetisierbaren Zylinderstift radial zumindest teilweise, der am Boden des Spalttopfes befestigt ist. Dieser Zylinderstift bündelt die Feldlinien des Permanentmagneten, so dass dem Hubsensor ein stärkeres Magnetfeld auch bei größeren Abständen des Permanentmagneten vom Hubsensor zur Erzeugung des Spannungssignals zur Verfügung steht. Es entsteht somit eine steilere Kennlinie.

Besonders vorteilhaft ist es, wenn der Rotor auf dem magnetisierbaren Zylinderstift gelagert ist, so dass der Zylinderstift zwei Funktionen erfüllt, nämlich die Funktion als Verstärker des Magnetfeldes und als Gleitlager für den sich drehenden Rotor. Auf diese Weise können Bauteile eingespart werden und somit Kosten reduziert werden.

Vorzugsweise ist der Zylinderstift axial zwischen dem Permanentmagneten und dem Hubsensor angeordnet. So wird eine gute Bündelung der Magnetfeldlinien insbesondere bei kleineren Hüben erreicht.

Bei größeren Hüben wird alternativ eine besonders gute Verstärkung des zu messenden Feldes erreicht, wenn der Zylinderstift als Hohlzylinderstift ausgebildet ist, in welchen der Permanentmagnet in zumindest einer Stellung der Spindelstange hineinragt. Auch kann der Magnet über den gesamten Hub in dem Hohlzylinderstift geführt werden, der zusätzlich eine Abschirmung vor anderen äußeren Magnetfeldern erzeugt und weiterhin als Lager für den Rotor dient.

Eine besonders kostengünstige und einfache Befestigung ergibt sich, wenn der Zylinderstift am Boden an der Innenseite des Spalttopfes durch Laserschweißen befestigt ist.

Alternativ ist am Boden des Spalttopfes ein Loch ausgebildet, durch welches der Zylinderstift aus dem Inneren des Spalttopfes in das Äußere des Spalttopfes ragt. Bei dieser Ausführung wird die Montage erleichtert, da eine bessere Zugänglichkeit gegeben ist.

Der Zylinderstift kann dann vorzugsweise durch Laserschweißen von außen am Spalttopf befestigt sein, so dass auch bei der Befestigung eine verbesserte Zugänglichkeit bezüglich der zu verwendenden Werkzeuge besteht.

In einer wiederum alternativen vorteilhaften Ausführung der Erfindung ist der Rotor über einen durch Tiefziehen des Spalttopfes hergestellten Lagerzapfen gelagert, in den von außen der magnetisierbare Zylinderstift eingepresst ist. So kann vollständig auf einen Schweißvorgang zur Befestigung des Stiftes verzichtet werden. Dennoch wird eine Bündelung der Magnetfeldlinien hergestellt und die Lagerung des Rotors sichergestellt. Die Montage des Zylinderstiftes gestaltet sich auch bei dieser Ausführung sehr einfach durch die äußere Zugänglichkeit.

Vorzugsweise ist der Rotor an seinem zum Zylinderstift gegenüberliegenden Ende über die Spindelmutter gelagert, die einen Absatz aufweist, auf dem ein Kugellager angeordnet ist, dessen Außenring in ein feststehendes Gehäuseteil eingepresst ist, welches in den Spalttopf ragt. So ergibt sich eine einfach montierbare, zweiseitige, zuverlässige Lagerung des Rotors und mit ihm der Spindelmutter.

Der bürstenlose Gleichstrommotor ist vorzugsweise ein Klauenpolmotor. Ein solcher Klauenpolmotor erzeugt ein sehr gleichmäßiges Drehmoment und ist entsprechend sehr genau zu regeln.

Bezüglich des Expansionsventils ist es besonders vorteilhaft, wenn der Ventilsitz an dem Gehäuseteil ausgebildet ist, welches den Außenring des Kugellagers des Aktors trägt. Damit wird sichergestellt, dass die Mittelachse der Spindelmutter und damit auch der Spindelstange und des verschiebbaren Regelkörpers die gleiche ist wie die Mittelachse des Ventilsitzes, so dass eine ringförmige Durchströmung am Expansionsventil entlang des nadelförmigen Regelkörpers und somit eine gute Expansion sichergestellt wird. Zusätzlich wird die Anzahl der Bauteile gering gehalten und die Montage entsprechend vereinfacht, so dass das Expansionsventil kostengünstig hergestellt werden kann.

In einer weiterführenden bevorzugten Ausführungsform ragt das Gehäuseteil in ein axiales Ende der Mantelfläche des Spalttopfes, wobei zwischen dem Gehäuseteil und dem Spalttopf ein Dichtring angeordnet ist. Entsprechend wird der Stator und damit die Wicklungen des Stators vor dem Kältemittel im Expansionsventil zuverlässig abgeschirmt. Auch hier ergibt sich eine besonders einfache Montage, da der Spalttopf einfach in die ringförmige Öffnung zur Herstellung der Verbindung eingeschoben werden kann.

Es wird somit ein Aktor für ein elektrisches Expansionsventil für einen Kälte- oder Klimakreislauf eines Kraftfahrzeugs sowie ein elektrisches Expansionsventil mit einem derartigen Aktor geschaffen, welches eine zuverlässige und direkte Detektierung des Hubes ermöglicht, so dass dieser Aktor sehr genau geregelt werden kann. Dies ermöglicht auch eine sehr genaue Regelung des Durchsatzes und des Druckabfalls über das Expansionsventil und somit eine Verbesserung der Regelung eines Kältemittelkreislaufs. Zusätzlich kann der Hubsensor zur Funktionsüberwachung genutzt werden. Der Aktor beziehungsweise das Expansionsventil sind dabei einfach und kostengünstig herstell- und montierbar und weisen wenige Bauteile auf, zusätzlich besteht ein sehr geringer Stromverbrauch. Durch die doppelte Funktion des Lagerstiftes lässt sich die optimale Position des Rotorlagers und die Verbesserung der magnetischen Signale herstellen.

Ausführungsbeispiele erfindungsgemäßer Aktoren für elektrische Expansionsventile für Kälte- oder Klimakreisläufe eines Kraftfahrzeugs sowie erfindungsgemäßer elektrischer Expansionsventile sind in den Figuren dargestellt und werden nachfolgend beschrieben.
Figur 1 zeigt eine Seitenansicht eines erfindungsgemäßen Expansionsventils mit einem erfindungsgemäßen Aktor in geschnittener Darstellung.
Figur 2 zeigt eine Seitenansicht eines alternativen erfindungsgemäßen Aktors in geschnittener Darstellung.
Figur 3 zeigt eine Seitenansicht eines weiteren alternativen erfindungsgemäßen Aktors in geschnittener Darstellung.
Figur 4 zeigt eine Seitenansicht einer vierten Ausführungsform eines erfindungsgemäßen Aktors in geschnittener Darstellung.

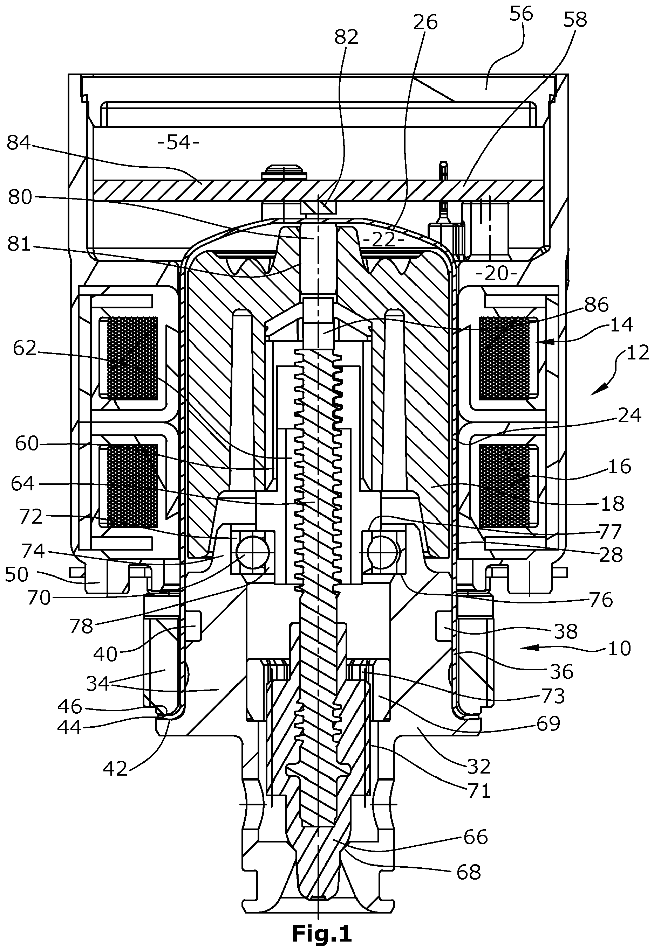

Das in der Figur 1 dargestellte Expansionsventil 10 für einen Kältemittel- oder Klimakreislauf weist einen Aktor 12 in Form eines als Klauenpolmotor ausgeführten bürstenlosen Gleichstrommotors 14 auf. Dieser Gleichstrommotor 14 besteht aus einem radial außen liegenden, bewickelten Stator 16 und einem radial innen angeordneten Rotor 18, der Permanentmagnete trägt. Ein äußerer Raum 20, in dem der Stator 16 angeordnet ist, wird von einem inneren Raum 22, in dem der Rotor 18 angeordnet ist, durch einen Spalttopf 24 getrennt.

Der Spalttopf 24 weist einen axial begrenzenden Boden 26 auf, von dem aus sich eine zylindrische Mantelfläche 28 axial erstreckt. In den Spalttopf 24 beziehungsweise in dessen zylindrische Mantelfläche 28 ragt ein feststehendes Gehäuseteil 32 eines Gehäuses 34 des Expansionsventils 10. An einer radial äußeren Wand 36 des Gehäuseteils 32 ist eine Radialnut 38 ausgebildet, in der ein Dichtring 40 angeordnet ist, der radial gegen die Mantelfläche 28 des Spalttopfes 24 anliegt. Zusätzlich ist an der radial außen begrenzenden Wand 36 ein Absatz 42 ausgebildet, mit dem das Gehäuseteil 32 gegen einen Kragen 44 am axialen Ende des Spalttopfes 24 anliegt, der mit seiner gegenüberliegenden axialen Seite gegen einen Absatz 46 an einem Aktorgehäuseteil 50 anliegt. Entsprechend wird der Stator 16 durch den Spalttopf 24 fluiddicht vom Rotor 18 getrennt.

Das Aktorgehäuseteil 50 umgibt den Stator 16 und den Spalttopf 24 radial. An der zum Gehäuseteil 32 axial entgegengesetzten Seite überragt das Aktorgehäuseteil 50 den Stator 16 und bildet eine Kammer 54 jenseits des Bodens 26 des Spalttopfes 24 aus, die durch einen Deckel 56 verschlossen wird und als Aufnahme für eine Elektronikeinheit 58 dient, die axial gegenüberliegend zum Boden 26 des Spalttopfes 24 angeordnet ist.

Der Rotor 18 weist eine radial innere, zur offenen Seite des Spalttopfes 24 gerichtete Aufnahmeöffnung 60 auf, in der eine Spindelmutter 62 befestigt ist, die ein Innengewinde aufweist, welches mit einem Außengewinde einer Spindelstange 64 korrespondiert.

Am vom Boden 26 des Spalttopfes entfernten Ende der Spindelstange 64 ist an der Spindelstange 64 ein Regelkörper 66 angeordnet, der mit einem Ventilsitz 68 zusammenwirkt, der am Gehäuseteil 32 des Expansionsventils 10 ausgebildet ist und auf welchen der Regelkörper 66 bei Drehung des Rotors 18 aufgesetzt wird oder von dem der Regelkörper 66 abgehoben wird, so dass eine genaue Regelung eines freien Durchströmungsquerschnitts zwischen dem Ventilsitz 68 und dem Regelkörper 66 in Abhängigkeit der Drehstellung des Rotors 18 erfolgt. Hierzu wird die Spindelstange 64 über den Regelkörper 66 axial verschiebbar in einem Gleitlager 69 gelagert, wobei am Regelkörper 66 außerhalb des Ventilsitzes 68 sich axial erstreckende Stege 71 ausgebildet sind, die in Nuten 73 des Gleitlagers 69 greifen und durch die die Spindelstange 64 gegen Drehung gesichert ist. Entsprechend wird die Drehung des Rotors 18 und mit ihm der Spindelmutter 62 in eine translatorische Bewegung der Spindelstange 64 und des Regelkörpers 66 umgewandelt.

Die Lagerung des Rotors 18 und der Spindelmutter 62 erfolgt einerseits über ein Kugellager 70, dessen Außenring 72 radial innen in einem ringförmigen Vorsprung 74 des Gehäuseteils 32, der sich axial in den Spalttopf 24 erstreckt, eingepresst ist und axial gegen einen Absatz 76 von dem aus sich der ringförmige Vorsprung 74 erstreckt, anliegt. Ein Innenring 78 des Kugellagers 70 liegt gegen ein zum Regelkörper 66 weisendes Ende der Spindelmutter 62 an, an dem ein Absatz 77 ausgebildet ist, gegen den der Innenring 78 axial anliegt. Am axial gegenüberliegenden Ende ist die Einheit aus Spindelmutter 62 und Rotor 18 auf einem als Gleitlager wirkenden Zylinderstift 80 angeordnet, der in einer korrespondierenden zentralen Öffnung 81 des Rotors 18 angeordnet ist und am Boden 26 des Spalttopfes 24 fixiert ist.

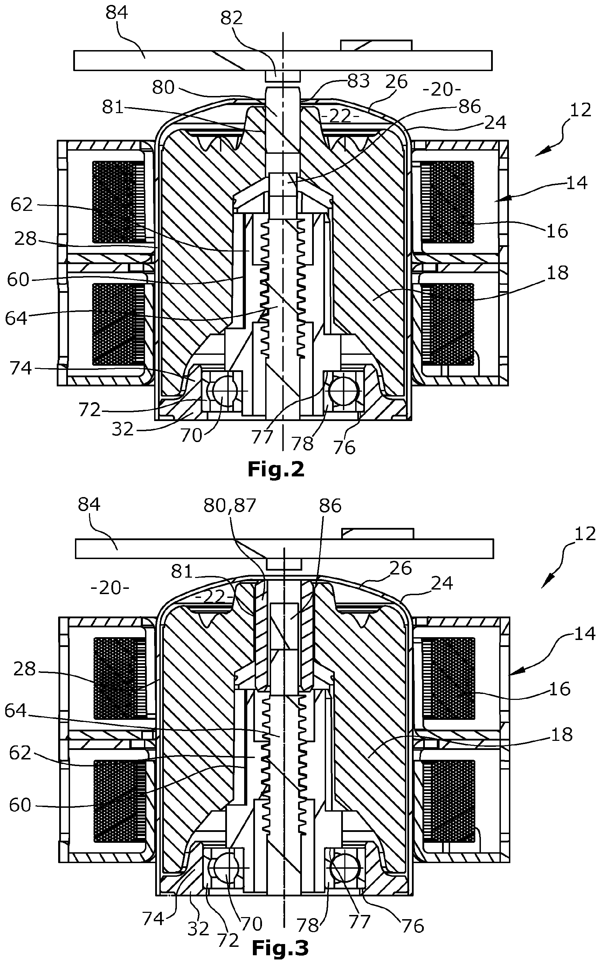

Im Ausführungsbeispiel gemäß der Figur 1 ist der Zylinderstift 80 am Boden 26 von innen vorzugsweise mittels Laserschweißen befestigt. Alternativ ist es jedoch auch möglich, diesen Zylinderstift 80, wie es in der Figur 2 dargestellt ist, in einem zentralen Loch 83 am Boden 26 anzuordnen, so dass der Zylinderstift 80 aus dem Innenraum 22 des Spalttopfes 24 in das Äußere des Spalttopfes 24 ragt, und den Zylinderstift 80 in dieser Position durch eine umlaufende Laserschweißnaht von außen am Spalttopf 24 zu befestigen und diesen mit dieser Schweißnaht gleichzeitig wieder dicht zu verschließen.

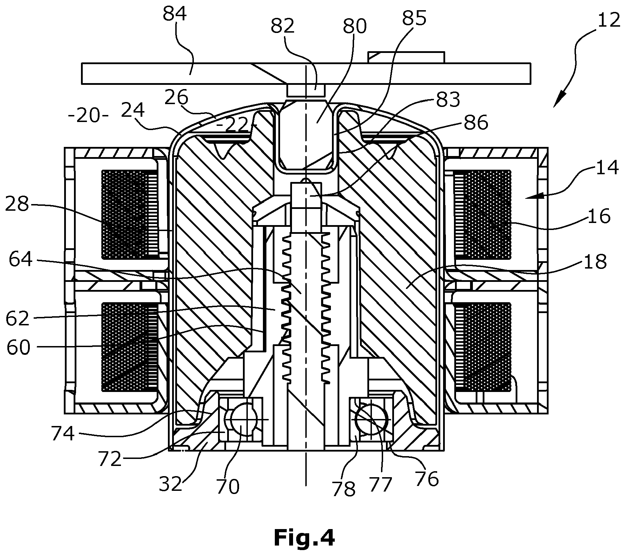

Eine weitere Alternative ist in der Figur 3 dargestellt. Hier ist der Zylinderstift 80 als Hohlzylinderstift 87 ausgeführt, der durch Laserschweißen von innen am Boden 26 des Spalttopfes 24 befestigt ist. In der Figur 4 ist der Spalttopf 24 als Tiefziehteil ausgebildet, an dem zentral ein Lagerzapfen 85 ausgebildet ist, auf dem der Rotor 18 gelagert wird. In die entstehende Aufnahme wird von außen der Zylinderstift 80 eingepresst.

In allen Alternativen besteht der Zylinderstift 80 aus einem magnetisierbaren Material, welches geeignet ist, Magnetfeldlinien zu bündeln. Dies erfolgt zur Verbesserung des Signals eines Hubsensors 82, der auf einer Platine 84 der Elektronikeinheit 58 unmittelbar axial gegenüberliegend zum Zylinderstift 80 im äußeren Raum 20 des Spalttopfes 24 angeordnet ist und der mit einem Permanentmagneten 86 zusammenwirkt, der am zum Regelkörper 66 gegenüberliegenden axialen Ende der Spindelstange 64 angeordnet ist.

Durch Drehung des Rotors 18 und damit der translatorischen Bewegung der Spindelstange 64 wird entsprechend auch der Permanentmagnet 86 vom Zylinderstift 80 entfernt oder näher zu diesem verfahren. Entsprechend ändert sich das auf den Zylinderstift 80 wirkende Magnetfeld, welches aufgrund der Nähe des Zylinderstiftes 80 zum Hubsensor 82 sehr genau von diesem erfasst werden kann und in bekannter Weise in ein elektrisches Signal umgewandelt wird, welches dann ein Maß für die Position des Regelkörpers 66 relativ zum Ventilsitz 68 bildet. So kann einerseits eine beidseitige Lagerung der Einheit aus Rotor 18 und Spindelmutter 62 erfolgen und dennoch eine genaue und direkte Lageerkennung der Spindelstange 64 durchgeführt werden, welche ohne Verwendung des ferromagnetischen Zylinderstifts 80 aufgrund des Abstandes zwischen dem Permanentmagneten 86 und dem Hubsensor 82 aufgrund des relativ schwachen Signals nicht mit einer so hohen Genauigkeit erfolgen könnte. So bewährt sich bei größeren Bauformen oder größeren Hüben auch das in Figur 3 dargestellte Ausführungsbeispiel, bei dem der Permanentmagnet 86 in den Hohlzylinderstift eintaucht, wodurch zu große Abstände zwischen dem Permanentmagneten 86 und dem Zylinderstift 80 vermieden werden und somit ebenfalls immer ein ausreichend starkes Signal am Hubsensor 82 zur Verfügung steht.

Entsprechend wird ein sehr genau regelbarer Aktor beziehungsweise ein hochgenau arbeitendes Expansionsventil geschaffen, welches einfach montierbar und kostengünstig herstellbar ist. Es wird eine sehr genaue Regelung des Durchsatzes und des Druckabfalls über das Expansionsventil 10 und somit eine Verbesserung der Regelung eines Kältemittelkreislaufs geschaffen. Zusätzlich kann der Hubsensor 82 zur Funktionsüberwachung genutzt werden.

Es sollte deutlich sein, dass der Schutzbereich des Hauptanspruchs nicht auf das beschriebene Ausführungsbeispiel begrenzt ist, sondern verschiedene Modifikationen möglich sind. So kann das Gehäuse andere Teilungen oder Konstruktionsformen aufweisen oder der Regelkörper und der Ventilsitz oder auch der Rotor oder der Spalttopf abweichende Formen aufweisen. Auch kann statt des Klauenpolmotors ein anderer elektronisch kommutierter Motor verwendet werden. Weitere konstruktive Änderungen sind ebenfalls denkbar.

## Patentansprüche

1. Aktor (12) für ein elektrisches Expansionsventil (10) für einen Kälte- oder Klimakreislauf eines Kraftfahrzeugs mit
einem bürstenlosen Gleichstrommotor (14) mit einem Stator (16) und einem Rotor (18),
einem Spalttopf (24) mit einem Boden (26) und einer radial begrenzenden Mantelfläche (28), die zwischen dem radial außen liegenden Stator (16) und dem radial innen angeordneten Rotor (18) angeordnet ist,
einer Spindelmutter (62), die mit dem Rotor (18) drehfest gekoppelt ist,
einer Spindelstange (64), die axial bewegbar ist und gegen Verdrehen gesichert ist,
**dadurch gekennzeichnet, dass**
am zum Boden (26) des Spalttopfes (24) weisenden Ende der Spindelstange (64) ein Permanentmagnet (86) angeordnet ist, der mit einem Hubsensor (82) zusammenwirkt, der zentral an der zur Spindelstange (64) gegenüberliegenden Seite des Bodens (26) des Spalttopfes (24) angeordnet ist, wobei der Rotor (18) einen magnetisierbaren Zylinderstift (80) radial zumindest teilweise umgibt, der am Boden (26) des Spalttopfes (24) befestigt ist.

2. Aktor für ein elektrisches Expansionsventil (10) für einen Kälte- oder Klimakreislauf eines Kraftfahrzeugs nach Anspruch 1,
**dadurch gekennzeichnet, dass**
der Rotor (18) auf dem magnetisierbaren Zylinderstift (80) gelagert ist.

3. Aktor für ein elektrisches Expansionsventil (10) für einen Kälte- oder Klimakreislauf eines Kraftfahrzeugs nach einem der vorhergehenden Ansprüche,
**dadurch gekennzeichnet, dass**
der Zylinderstift (80) axial zwischen dem Permanentmagneten (86) und dem Hubsensor (82) angeordnet ist.

4. Aktor für ein elektrisches Expansionsventil (10) für einen Kälte- oder Klimakreislauf eines Kraftfahrzeugs nach einem der Ansprüche 1 oder 2,
**dadurch gekennzeichnet, dass**
der Zylinderstift (80) als Hohlzylinderstift (87) ausgebildet ist, in welchen der Permanentmagnet (86) in zumindest eine Stellung der Spindelstange (64) hineinragt.

5. Aktor für ein elektrisches Expansionsventil (10) für einen Kälte- oder Klimakreislauf eines Kraftfahrzeugs nach einem der vorhergehenden Ansprüche,
**dadurch gekennzeichnet, dass**
der Zylinderstift (80) am Boden (26) an einer Innenseite des Spalttopfes (24) durch Laserschweißen befestigt ist.

6. Aktor für ein elektrisches Expansionsventil (10) für einen Kälte- oder Klimakreislauf eines Kraftfahrzeugs nach einem der Ansprüche 1 bis 3, **dadurch gekennzeichnet, dass**
am Boden (26) des Spalttopfes (24) ein Loch (83) ausgebildet ist, durch welches der Zylinderstift (80) aus einem inneren Raum (22) des Spalttopfes (24) in einen außerhalb des Spalttopfes (24) angeordneten Raum (20) ragt.

7. Aktor für ein elektrisches Expansionsventil (10) für einen Kälte- oder Klimakreislauf eines Kraftfahrzeugs nach Anspruch 6,
**dadurch gekennzeichnet, dass**
der Zylinderstift (80) durch Laserschweißen von außen am Boden (26) des Spalttopfes (24) befestigt ist.

8. Aktor für ein elektrisches Expansionsventil (10) für einen Kälte- oder Klimakreislauf eines Kraftfahrzeugs nach Anspruch 1,
**dadurch gekennzeichnet, dass**
der Rotor (18) über einen durch Tiefziehen des Spalttopfes (24) hergestellten Lagerzapfen (85) gelagert ist, in den von außen der magnetisierbare Zylinderstift (80) eingepresst ist.

9. Aktor für ein elektrisches Expansionsventil (10) für einen Kälte- oder Klimakreislauf eines Kraftfahrzeugs nach einem der vorhergehenden Ansprüche,
**dadurch gekennzeichnet, dass**
der Rotor (18) an seinem zum Zylinderstift (80) gegenüberliegenden Ende über die Spindelmutter (62) gelagert ist, die einen Absatz (76) aufweist, auf dem ein Kugellager (70) angeordnet ist, dessen Außenring (72) in ein feststehendes Gehäuseteil (32) eingepresst ist, welches in den Spalttopf (24) ragt.

10. Aktor für ein elektrisches Expansionsventil (10) für einen Kälte- oder Klimakreislauf eines Kraftfahrzeugs nach einem der vorhergehenden Ansprüche,
**dadurch gekennzeichnet, dass**
der bürstenlose Gleichstrommotor (14) ein Klauenpolmotor ist.

11. Elektrisches Expansionsventil (10) für einen Kälte- oder Klimakreislauf eines Kraftfahrzeugs mit einem Aktor (12) nach einem der vorhergehenden Ansprüche,
wobei das Expansionsventil (10) einen Regelkörper (66) aufweist, der am zum Permanentmagneten (86) entgegengesetzten Ende der Spindelstange (64) ausgebildet ist, und der mit einem Ventilsitz (68) zusammenwirkt, der an einem Gehäuse (34) des Expansionsventils (10) ausgebildet ist.

12. Elektrisches Expansionsventil (10) für einen Kälte- oder Klimakreislauf eines Kraftfahrzeugs nach Anspruch 11,
**dadurch gekennzeichnet, dass**
der Ventilsitz (68) an dem Gehäuseteil (32) ausgebildet ist, welches den Außenring (72) des Kugellagers (70) des Aktors (12) trägt.

13. Elektrisches Expansionsventil (10) für einen Kälte- oder Klimakreislauf eines Kraftfahrzeugs nach einem der Ansprüche 11 oder 12,
**dadurch gekennzeichnet, dass**
das Gehäuseteil (32) in ein axiales Ende der Mantelfläche (28) des Spalttopfes (24) ragt, wobei zwischen dem Gehäuseteil (32) und dem Spalttopf (24) ein Dichtring (40; 46) angeordnet ist.

## Claims

1. Actuator (12) for an electric expansion valve (10) for a cooling or air conditioning circuit of a motor vehicle, with
a brushless DC motor (14) with a stator (16) and a rotor (18),
a separating can (24) with a bottom (26) and a radially delimiting outer surface (28) which is arranged between the radially outer stator (16) and the radially inner rotor (18),
a spindle nut (62) that is coupled to the rotor (18) in a rotationally fixed manner,
a spindle rod (64) which is axially movable and locked against rotation,
**characterised in that**
a permanent magnet (86) is arranged at the end of the spindle rod (64) facing the bottom (26) of the separating can (24), which permanent magnet (86) interacts with a stroke sensor (82) which is arranged centrally at the side of the bottom (26) of the separating can (24) opposite to the spindle rod (64) side of the bottom (26) of the separating can (24), wherein the rotor (18) radially at least partially surrounds a magnetisable cylindrical pin (80) which is attached to the bottom (26) of the separating can (24).

2. Actuator for an electric expansion valve (10) for a cooling or air conditioning circuit of a motor vehicle according to claim 1,
**characterised in that**
the rotor (18) is beared at the magnetisable cylinder pin (80).

3. Actuator for an electric expansion valve (10) for a cooling or air conditioning circuit of a motor vehicle according to one of the preceding claims,
**characterised in that**
the cylindrical pin (80) is arranged axially between the permanent magnet (86) and the stroke sensor (82).

4. Actuator for an electric expansion valve (10) for a cooling or air conditioning circuit of a motor vehicle according to one of the claims 1 or 2,
**characterised in that**
the cylindrical pin (80) is configured as a hollow cylindrical pin (87) into which the permanent magnet (86) projects at least in one position of the spindle rod (64).

5. Actuator for an electric expansion valve (10) for a cooling or air conditioning circuit of a motor vehicle according to one of the preceding claims,
**characterised in that**
the cylindrical pin (80) is attached to the bottom (26) at an inner side of the separating can (24) by laser welding.

6. Actuator for an electric expansion valve (10) for a cooling or air conditioning circuit of a motor vehicle according to one of the claims 1 to 3,
**characterised in that**
a hole (83) is configured in the bottom (26) of the separating can (24), through which the cylindrical pin (80) projects from an inner space (22) of the separating can (24) into a space (20) located outside of the separating can (24).

7. Actuator for an electric expansion valve (10) for a cooling or air conditioning circuit of a motor vehicle according to claim 6,
**characterised in that**
the cylindrical pin (80) is attached to the bottom (26) of the separating can (24) from the outside by laser welding.

8. Actuator for an electric expansion valve (10) for a cooling or air conditioning circuit of a motor vehicle according to claim 1,
**characterised in that**
the rotor (18) is beared by a bearing pin (85) which is produced by deep drawing the separating can (24) and into which the magnetisable cylindrical pin (80) is pressed from the outside.

9. Actuator for an electric expansion valve (10) for a cooling or air conditioning circuit of a motor vehicle according to one of the preceding claims,
**characterised in that**
the rotor (18) is beared at its end opposite to the cylindrical pin (80) by the spindle nut (62) which comprises a shoulder (76) at which a ball bearing (70) is arranged, the outer ring (72) of which is pressed into a fixed housing part (32) which projects into the separating can (24).

10. Actuator for an electric expansion valve (10) for a cooling or air conditioning circuit of a motor vehicle according to one of the preceding claims,
**characterised in that**
the brushless DC motor (14) is a claw pole motor.

11. Electric expansion valve (10) for a cooling or air conditioning circuit of a motor vehicle with an actuator (12) according to one of the preceding claims,
wherein the expansion valve (10) comprises a control body (66) which is configured at the end of the spindle rod (64) opposite the permanent magnet (86) and which interacts with a valve seat (68) configured at a housing (34) of the expansion valve (10).

12. Electric expansion valve (10) for a cooling or air conditioning circuit of a motor vehicle according to claim 11,
**characterised in that**
the valve seat (68) is configured on the housing part (32) which carries the outer ring (72) of the ball bearing (70) of the actuator (12).

13. Electric expansion valve (10) for a cooling or air conditioning circuit of a motor vehicle according to one of Claims 11 or 12,
**characterised in that**
the housing part (32) projects into an axial end of the outer surface (28) of the separating can (24), wherein a sealing ring (40; 46) is arranged between the housing part (32) and the separating can (24).

## Revendications

1. Actionneur (12) pour un détendeur électrique (10) pour un circuit de réfrigération ou de climatisation d'un véhicule automobile avec
un moteur DC brushless (14) avec un stator (16) et un rotor (18),
un pot de séparation (24) avec un fond (26) et une surface d'enveloppe (28) limitant radialement, qui est disposé entre le stator (16) situé radialement à l'extérieur et le rotor (18) disposé radialement à l'intérieur, un écrou de broche (62) qui est couplé au rotor (18) sans pouvoir tourner, une tige de broche (64) qui est mobile axialement et qui est bloquée en rotation,
**caractérisé en ce que**
à l'extrémité de la tige de broche (64) orientée vers le fond (26) du pot de séparation (24) est disposé un aimant permanent (86) qui coopère avec un capteur de levage (82) qui est disposé de manière centrale sur le côté du fond (26) du pot de séparation (24) opposé à la tige de broche (64), le rotor (18) entourant radialement au moins partiellement une tige cylindrique magnétisable (80) qui est fixée au fond (26) du pot de séparation (24).

2. Actionneur pour un détendeur électrique (10) pour un circuit de réfrigération ou de climatisation d'un véhicule automobile selon la revendication 1,
**caractérisé en ce que**
le rotor (18) est supporté sur la tige cylindrique magnétisable (80).

3. Actionneur de détendeur électrique (10) pour un circuit de réfrigération ou de climatisation d'un véhicule automobile selon l'une des revendications précédentes,
**caractérisé en ce que**
la tige cylindrique (80) est disposée axialement entre l'aimant permanent (86) et le capteur de levage (82).

4. Actionneur pour détendeur électrique (10) pour un circuit de réfrigération ou de climatisation de véhicule automobile selon l'une des revendications 1 ou 2,
**caractérisé en ce que**
la tige cylindrique (80) est une tige cylindrique creuse (87) dans laquelle l'aimant permanent (86) pénètre dans au moins une position de la tige de broche (64).

5. Actionneur pour détendeur électrique (10) pour un circuit de réfrigération ou de climatisation d'un véhicule automobile selon l'une des revendications précédentes,
**caractérisé en ce que**
la tige cylindrique (80) est fixée au fond (26) sur une face interne du pot de séparation (24) par soudage laser.

6. Actionneur pour détendeur électrique (10) pour un circuit de réfrigération ou de climatisation d'un véhicule automobile selon l'une quelconque des revendications 1 à 3,
**caractérisé en ce que**
un trou (83) est réalisé au fond (26) du pot de séparation (24), à travers lequel la tige cylindrique (80) fait saillie d'un espace intérieur (22) du pot de séparation (24) dans un espace (20) situé à l'extérieur du pot de séparation (24).

7. Actionneur pour un détendeur électrique (10) pour un circuit de réfrigération ou de climatisation d'un véhicule automobile selon la revendication 6,
**caractérisé en ce que**
la tige cylindrique (80) est fixée par soudage laser extérieur au fond (26) du pot de séparation (24).

8. Actionneur de détendeur électrique (10) pour un circuit de réfrigération ou de climatisation d'un véhicule automobile selon la revendication 1,
**caractérisé en ce que**
le rotor (18) est supporté par l'intermédiaire d'un tourillon (85) réalisé par emboutissage du pot de séparation (24) et dans lequel la tige cylindrique magnétisable (80) est emmanchée à force depuis l'extérieur.

9. Actionneur pour détendeur électrique (10) pour un circuit de réfrigération ou de climatisation d'un véhicule automobile selon l'une des revendications précédentes,
**caractérisé en ce que**
le rotor (18) est supporté à son extrémité opposée à la tige cylindrique (80) par l'écrou de broche (62) qui comprend un épaulement (76) sur lequel est disposé un roulement à billes (70) dont la bague extérieure (72) est emmanchée à force dans une partie de boîtier fixe (32) qui fait saillie dans le pot de séparation (24).

10. Actionneur pour détendeur électrique (10) pour un circuit de réfrigération ou de climatisation d'un véhicule automobile selon l'une des revendications précédentes,
**caractérisé en ce que**
le moteur DC brushless (14) est un moteur à pôles à griffes.

11. Détendeur électrique (10) pour un circuit de réfrigération ou de climatisation d'un véhicule automobile, avec un actionneur (12) selon l'une des revendications précédentes,
dans lequel le détendeur (10) comprend un corps de régulation (66) qui est compris à l'extrémité de la tige (64) opposée à l'aimant permanent (86) et qui coopère avec un siège de vanne (68) formé sur un boîtier (34) du détendeur (10).

12. Détendeur électrique (10) pour un circuit de réfrigération ou de climatisation d'un véhicule automobile selon la revendication 11,
**caractérisé en ce que**
le siège de vanne (68) est formé sur la partie de boîtier (32) qui porte la bague extérieure (72) du roulement à billes (70) de l'actionneur (12).

13. Détendeur électrique (10) pour un circuit de réfrigération ou de climatisation d'un véhicule automobile selon l'une des revendications 11 ou 12,
**caractérisé en ce que**
la partie de boîtier (32) fait saillie dans une extrémité axiale de la surface d'enveloppe (28) du pot de séparation (24), un joint d'étanchéité (40 ; 46) étant disposé entre la partie de boîtier (32) et le pot de séparation (24).
